Europäisches Patentamt

(19) European Patent Office

Office européen des brevets

(11) Publication number: **0 163 135**
**A2**

(12) **EUROPEAN PATENT APPLICATION**

(21) Application number: 85105065.8

(22) Date of filing: 25.04.85

(51) Int. Cl.⁴: **C 12 C 9/02**
**C 12 G 1/02**

(30) Priority: 27.04.84 US 604777
12.02.85 US 699314

(43) Date of publication of application:
04.12.85 Bulletin 85/49

(84) Designated Contracting States:
AT BE CH DE FR IT LI LU NL SE

(71) Applicant: CPC INTERNATIONAL INC.
International Plaza P.O. Box 8000
Englewood Cliffs New Jersey 07632(US)

(72) Inventor: McCrea, Jan M.
515 W. Saddle River Road
Upper Saddle River New Jersey 07458(US)

(72) Inventor: Hebeda, Ronald E.
61 Starling Lane
Naperville Illinois 60565(US)

(72) Inventor: Stark, Leonard E.
8 S. 681 Yackley Road
Naperville Illinois 60565(US)

(74) Representative: Lederer, Franz, Dr. et al,
Patentanwälte Dr. Franz Lederer Dipl.-Ing. Reiner F.
Meyer-Roxlau Lucile-Grahn-Strasse 22
D-8000 München 80(DE)

(54) Process for the production of low-calorie alcoholic beverages.

(57) A method for producing a low-calorie alcholic beverage whereby a starch hydrolyzate is combined with the fermentation mixture used to produce the beverage. The starch hydrolyzate is one obtained by the enzymatic hydrolysis of starch. The fermentation mixture is contacted with a saccharifying enzyme to provide concurrent saccharification and fermentation of the starch hydrolyzate.

Croydon Printing Company Ltd.

CPC INTERNATIONAL INC.
International Plaza
P.O.Box 8000

Englewood Cliffs, N.J. 07632

U S A

0163135

April 25, 1985

3320-A

# PROCESS FOR THE PRODUCTION OF LOW-CALORIE ALCOHOLIC BEVERAGES

This invention relates to an improved process for the production of low-calorie alcoholic beverages. A starch hydrolyzate is combined with the fermentation mixture used to produce the beverage. The mixture is contacted with a saccharifying enzyme to give a product with a very low carbohydrate content.

The preparation of beer begins with a malting stage where barley is soaked in water and allowed to germinate. This step releases amylase which converts the starch from the grain into sugar. Other grains, such as corn or rice, may be added and the mixture is cooked together to form a mash. The spent grains are removed by filtration and the resulting liquid, called wort, is brewed with hops. The hops give the beer a somewhat bitter flavor and this process stops the enzymatic conversion of starch to sugar. The wort is then cooled and filtered to remove the spent hops.

Next, yeast is added to the wort to convert the sugars to alcohol and carbon dioxide in a fermentation process. Following the fermentation step, the mixture is stored, allowing the yeast to settle out after which the beer is again filtered, bottled or canned and pasteurized. Often, sugars or syrups are added to enhance the production of alcohol and carbon dioxide in the fermentation step.

In order to produce a low-calorie beer, it is desirable to consume as many of the carbohydrates as possible in the fermentation process. Simple sugars are broken down by the action of yeast which converts them to alcohol and carbon dioxide. However, yeast is unable to utilize more complex carbohydrates. For this reason, glucoamylase is frequently added at the fermentation step. This enzyme converts the larger carbohydrates to simple sugars which are then fermented by the yeast.

For the production of low-calorie beer, it has been necessary to use only expensive, highly-purified sugars as additives in the fermentation step. These sugars have been used because less-expensive carbohydrates, such as corn syrups, are not completely fermented by the yeast, even in the presence of glucoamylase enzyme. Such unfermented carbohydrates add an undesirable caloric content to the beverage.

We have discovered a process which does not require the use of highly-purified sugars as additives in low-calorie beer production. The process has been used for the production of low-calorie wine as well, thus, demonstrating its applicability as a general process for the production of low-calorie alcoholic beverages.

Now, in accordance with this invention, there is provided a process for making a low-calorie alcoholic beverage by the fermentation of carbohydrates by a yeast. This process comprises mixing a starch hydrolyzate with the carbohydrates and yeast to give a fermentation mixture containing the starch hydrolyzate. The starch hydrolyzate used in this process consists of a product obtained by the enzymatic hydrolysis of starch. The fermentation mixture containing starch hydrolyzates is contacted with a saccharifying enzyme. When the fermentation is finished, the low-calorie beverage is separated from the yeast and other insoluble material.

Further provided, in accordance with this invention, is a process for making a low-calorie beer by the fermentation of wort by a yeast which comprises mixing a starch hydrolyzate with the wort and yeast, said starch hydrolyzate consisting of a product obtained by the partial enzymatic hydrolysis of starch. The wort containing starch hydrolyzate is contacted with a saccharifying enzyme. When the fermentation is finished, the low-calorie beer is separated from the yeast and other insoluble material.

Also disclosed, in accordance with this invention, is a fermentation additive useful for the preparation of low-calorie alcoholic beverages. This additive comprises a mixture of a saccharifying enzyme and starch hydrolyzate obtained by the partial enzymatic hydrolysis of starch.

The term dextrose equivalent or "D.E." value used herein refers to the reducing sugar content of the dissolved solids in a starch hydrolyzate expressed as percent dextrose as measured by the Schoorl method (Encyclopedia of Industrial Chemical Analysis, Vol. 2, pp. 41-42).

Glucoamylase activity units are determined as follows:

The substrate is a 10-20 D.E. alpha-amylase thinned hydrolyzate of waxy maize starch dissolved in water and diluted to 4.0 grams of dry substance per 100 ml of solution. Exactly 50 ml of the solution is pipetted into a 100-ml volumetric flask. To the flask is added 5.0 ml of 1.0 molar sodium acetate-acetic acid buffer (pH 4.3). The flask is placed in a water bath at 60°C and after 10 minutes the proper amount of enzyme preparation is added. At exactly 120 minutes after addition of the enzyme preparation, the solution is adjusted to a phenolphthalein end point with 0.5 N sodium hydroxide. The solution is then cooled to room temperature and diluted to volume. A reducing sugar value, calculated as dextrose, is determined on the diluted sample and on a control with no enzyme preparation added. Glucoamylase activity is calculated as follows:

$$A = (S-B)/(2 \times E)$$

where,

A = glucoamylase activity units per ml (or per gram) of enzyme preparation

S = reducing sugars in enzyme converted sample, grams per 100 ml

B = reducing sugars in control, grams per 100 ml

E = amount of enzyme preparation used, ml (or grams)

S should not exceed 10 grams per 100 ml.

6

Samples of the material before and after fermentation were analyzed for carbohydrate and ethanol content by high performance liquid chromatography in accordance with the following technique. Components were chromatographed by elution with water from a cation-exchange resin in the calcium form. The eluted components were detected by means of a differential refractometer. All carbohydrates were quantitated using an electronic integrator. The general procedure is that given in "Analysis of Carbohydrate Mixtures by Liquid Chromatography", Am. Soc. Brew. Chem. Proc., 1973, pp. 43-46. The column used is HPX-87 in the calcium form, Bio-Rad Laboratories, Richmond, California.

The process of the present invention involves mixing a starch hydrolyzate with the material that is fermented to produce an alcoholic beverage. When the process is employed for the preparation of low-calorie beer, the starch hydrolyzate is added to the wort either before or during the fermentation step. When the process is applied to the preparation of low-calorie wine, the starch hydrolyzate is added to the grape concentrate either before or during the fermentation step.

The starch hydrolyzate used in the process of this invention is prepared by the enzymatic hydrolysis of starch. Such hydrolysis is generally carried out by means of a glucoamylase enzyme. However, before the starch can be effectively converted by glucoamylase, it must first be gelatinized and thinned. This is accomplished by heating the starch in a water slurry above the gelatinization temperature of the starch and then partially hydrolyzing the solubilized starch with either acid or alpha-amylase. The objective of this thinning is to reduce the starch to a manageable, essentially completely soluble and nonretrogradable form. It is preferred to use an alpha-amylase enzyme to thin the starch. Thinning can also be carried out by means of an acid. However, if an acid is used for the thinning step, such thinning is carried out to a D.E. of not more than about 10 before the product is treated with an enzyme for further hydrolysis.

Starch hydrolyzates having a broad range of D.E.s can be used in the practice of this invention. However, if the D.E. of the hydrolyzate is too low, an aqueous solution of the hydrolyzate tends to retrograde forming a hazy or gelatinous syrup. On the other hand, if the D.E. of the hydrolyzate is too high, dexrose tends to crystallize from concentrated aqueous solutions of the hydrolyzate causing difficulties in handling. It is recommended for the purposes of this invention to use a starch hydrolyzate having a D.E. of from about 7 to about 80, preferably a D.E. of from about 20 to about 70, and more preferably having a D.E. of from about 30 to about 60.

The process of this invention further involves the treatment of the fermentation mixture containing the starch hydrolyzate with a saccharifying enzyme. This produces a concurrent saccharification of the starch hydrolyzate to produce fermentable sugars and fermentation of the sugars to alcohol.

Any of the readily available glucoamylase enzyme preparations are suitable for use as the saccharifying enzyme in the practice of this invention. Such preparations are produced from certain fungi strains such as those of genus Aspergillus, for example, Aspergillus niger, Aspergillus awamori, and Aspergillus phoenicis. A particularly suitable glucoamylase is the one produced by Aspergillus niger, available as G-ZYME from the Enzyme Development Company, 2 Penn Plaza, New York, New York.

Other saccharifying enzymes useful in the practice of this invention include maltogenic enzymes such as the beta-amylases extracted from grains or the alpha-amylase derived from Aspergillus oryzae. Also, for the purposes of this invention, the saccharifying enzyme may include a debranching enzyme such as pullulanase.

-8-

One way to treat the fermentation mixture with a saccharifying enzyme is to contact it with an immobilized enzyme. Such immobilized enzymes can be made by adsorbing the enzyme on a solid support. Alternatively, the enzyme can be bound to the support by means of covalent or ionic chemical bonds. Examples of glucoamylases immobilized on various solid support materials and their use in the saccharification reaction are well known. They are described for example in U.S. Patents 4,202,939; 4,226,937 and 4,430,348.

Alternatively, a soluble enzyme can be added to the fermentation mixture directly. When soluble glucoamylase is used, the amount of enzyme required will depend somewhat on the D.E. of the starch hydrolyzate added. Somewhat more glucoamylase is needed if a starch hydrolyzate of a low D.E. is employed. In general, the amount of glucoamylase used will vary from about 0.1 unit to about 1.0 unit per gram of starch hydrolyzate on a dry substance basis.

When the fermentation reaction is finished, the low-calorie beverage is separated from the yeast cells and other insoluble material. Conventional methods, such as filtration or decantation, can be used for this separation.

The process of this invention is illustrated further by the following examples in which all parts and proportions are by weight unless otherwise specified.

## EXAMPLE 1

A liquefied thinned starch having a D.E. of approximately 10 was prepared by heating an aqueous suspension of corn starch with TERMAMYL, an alpha-amylase enzyme from Bacillus licheniformis, available from Novo Laboratories, Wilton, Connecticut. The procedure followed was the general procedure of U.S. Patent 3,912,590. The liquefied starch solution was further saccharified with glucoamylase enzyme. Saccharification was carried out for approximately 1 hour at 60°C, pH 4.3, using 0.15 unit of glucoamylase per gram of carbohydrate on a dry solids basis. The glucoamylase used was a commercial glucoamylase produced by Aspergillus niger, available as G-ZYME from the Enzyme Development Company, 2 Penn Plaza, New York, New York. The mixture was boiled for 20 minutes and filtered after the addition of diatomaceous earth filter-aid. Analysis showed that the starch hydrolyzate had a D.E. of 37.4.

To a solution of starch hydrolyzate containing 60 g of dry substance was added 80 g of dried brewers' wort (available from Winemakers, Elmhurst, Illinois), 1 g of hops and sufficient water to give a total volume of 800 ml. The mixture was stirred in a boiling water bath for 1 hour before it was cooled and adjusted to 1000 ml by the addition of sterile distilled water. To 250 ml of the mixture of wort and starch hydrolyzate was added 7.5 units of G-ZYME Brand Glucoamylase (0.5 unit per g of hydrolyzate) and 5 g of distillers' active dry yeast (Red Star Division of Universal Food Corp., Milwaukee, Wisconsin). The mixture was stirred with a slow-speed magnetic stirrer in a 500-ml flask at 15-16°C for 5 days. The flask was fitted with a means for release of the evolved gas. After 5 days, the mixture was filtered and analyzed by high performance liquid chromatography.

For comparison purposes, the foregoing experiment was repeated using a solution to which no glucoamylase had been added. For additional comparisons, the starch hydrolyzate was replaced with commercial corn syrups prepared by an acid/enzyme or an acid hydrolysis of starch.

The results given in Table I indicate that the beer obtained by the process of this invention contains more alcohol and less residual carbohydrate than that obtained using no glucoamylase or that obtained using a mixture of glucoamylase and commercial corn syrups.

## TABLE I

### LOW-CALORIE BEER

| Adjunct | Initial Carbohydrate (g/100 ml) | Final Carbohydrate (g/100 ml) | Ethanol (g/100 ml) | % of Original Carbohydrate Fermented |
|---------|---------------------------------|-------------------------------|--------------------|--------------------------------------|
| 37.4 D.E. Starch Hydrolyzate[a] | 14.39 | 5.59 | 3.67 | 61.2 |
| 37.4 D.E. Starch Hydrolyzate + Glucoamylase | 14.39 | 0.37 | 6.36 | 97.4 |
| GLOBE Corn Syrup 1132[b] + Glucoamylase[a] | 13.41 | 0.38 | 6.15 | 93.4 |
| GLOBE Corn Syrup 1632[c] + Glucoamylase[a] | 13.32 | 0.91 | 5.95 | 93.2 |

a) Comparative test; not an example of this invention.

b) A 41-47 D.E. acid-hydrolyzed corn syrup, available from Corn Products, Unit of CPC International, Englewood Cliffs, N.J.

c) A 61-67 D.E. acid/enzyme corn syrup, available from Corn Products, Unit of CPC International, Englewood Cliffs, N.J.

## EXAMPLE 2

The procedure of Example 1 was repeated except that a malt extract (Hansberg Export, a German malt extract imported and distributed by Dover Vineyards Inc., Cleveland, Ohio) was used in place of dry wort. The results of these experiments given in Table II are similar to those observed when dry wort was used as the starting material.

### TABLE II

### LOW-CALORIE BEER

| Adjunct | Initial Carbohydrate (g/100 ml) | Final Carbohydrate (g/100 ml) | Ethanol (g/100 ml) | % of Original Carbohydrate Fermented |
|---|---|---|---|---|
| 37.4 D.E. Starch Hydrolyzate[a] | 13.02 | 6.22 | 2.88 | 52.2 |
| 37.4 D.E. Starch Hydrolyzate + Glucoamylase | 13.02 | 0.42 | 5.50 | 96.8 |
| GLOBE Corn Syrup 1132[b] + Glucoamylase[a] | 12.83 | 0.89 | 5.17 | 93.1 |
| GLOBE Corn Syrup 1632[c] + Glucoamylase[a] | 12.74 | 0.90 | 5.25 | 92.9 |

a) Comparative test, not an example of this invention.

b) A 41-47 D.E. acid-hydrolyzed corn syrup, available from Corn Products, Unit of CPC International, Englewood Cliffs, N.J.

c) A 61-67 D.E. acid/enzyme corn syrup, available from Corn Products, Unit of CPC International, Englewood Cliffs, N.J.

-13-

14

## EXAMPLE 3

The general procedure of Example 1 was followed except that in place of the wort there was added 200 grams of French Columbard Grape Concentrate (California Concentrate Company, Acampo, California), 1 g of yeast nutrient, 0.1 g grape tannin and 0.5 g pectic enzymes (the last three items available from Wines Inc., Akron, Ohio) were also used in place of the wort. Distilled water was used to dilute the mixture but the mixture was not boiled before treatment with yeast. The results of the experiments are given in Table III. They show that the process of this invention is suitable for the preparation of low-calorie wine as well as for the preparation of low-calorie beer.

## TABLE III

### LOW-CALORIE WINE

| Adjunct | Initial Carbohydrate (g/100 ml) | Final Carbohydrate (g/100 ml) | Ethanol (g/100 ml) | % of Original Carbohydrate Fermented |
|---|---|---|---|---|
| 37.4 D.E. Starch Hydrolyzate[a] | 20.47 | 4.78 | 7.09 | 76.7 |
| 37.4 D.E. Starch Hydrolyzate + Glucoamylase | 21.19 | 0.51 | 9.00 | 97.6 |
| GLOBE Corn Syrup 1132[b] + Glucoamylase[a] | 20.73 | 1.16 | 8.90 | 94.4 |
| GLOBE Corn Syrup 1632[c] + Glucoamylase[a] | 19.60 | 1.04 | 8.74 | 94.7 |

a) Comparative test; not an example of this invention.

b) A 41-47 D.E. acid-hydrolyzed corn syrup, available from Corn Products, Unit of CPC International, Englewood Cliffs, N.J.

c) A 61-67 D.E. acid/enzyme corn syrup, available from Corn Products, Unit of CPC International, Englewood Cliffs, N.J.

## EXAMPLE 4

The procedure of Example 1 was repeated using a proprietary brewers' wort and a proprietary brewers' yeast. The results were essentially the same as those given in Example 1. This indicates that the procedure of this invention is suitable for use with wort from various sources and with a variety of brewers' yeasts.

## EXAMPLE 5

The procedure of Example 4 was repeated except that the glucoamylase enzyme, G-ZYME, was replaced with an equivalent amount of AMG 200, a glucoamylase available from Novo Laboratories, Wilton, Connecticut. Again, the results of this experiment were very similar to those obtained in Example 1. This demonstrates that the process of this invention can be carried out using glucoamylases from various sources.

## EXAMPLE 6

The general procedure of Example 1 was followed. The 37.4 D.E. starch hydrolyzate and varying amounts of glucoamylase were added to the fermentation mixture containing dry brewers' wort. The results of these experiments are given in Table IV. They

0163135

indicate that the rate of fermentation depends upon the amount of glucoamylase used in the process.

## TABLE IV

### LOW-CALORIE BEER

| Glucoamylase (unit/g of starch hydrolyzate) | Initial Carbohydrate (g/100 ml) | Final Carbohydrate (g/100 ml) | Ethanol (g/100 ml) | % of Original Carbohydrate Fermented |
|---|---|---|---|---|
| 0[a] | 15.49 | 6.54 | 3.91 | 57.8 |
| 0.10 | 15.49 | 2.25 | 5.79 | 85.5 |
| 0.25 | 15.49 | 0.84 | 6.49 | 94.6 |
| 0.50 | 15.49 | 0.43 | 6.64 | 97.2 |
| 0.75 | 15.49 | 0.31 | 7.06 | 98.0 |
| 1.0 | 15.49 | 0.31 | 7.06 | 98.0 |

a) Comparative test; not an example of this invention.

### EXAMPLE 7

A liquefied thinned starch having a D.E. of 7.7 was prepared by heating an aqueous suspension of corn starch with the _alpha_-amylase enzyme, TERMAMYL, as in Example 1.

Portions of the thinned starch were heated with additional _alpha_-amylase enzyme (0.5 unit of enzyme per gram of dry basis starch) for times of 1, 2, and 3 hours. In each case, the enzyme activity was stopped at the end of the reaction time by lowering the pH to 4.0 with hydrochloric acid. These reactions

-17-

gave starch hydrolyzates with D.E. values of 14.2, 18.0 and 21.5, respectively.

The starch hydrolyzates were mixed with brewers' wort, hops, and water before the mixture was fermented with yeast using the proportions and conditions given in Example 1 except that the fermentation was carried out for 5 days at 20°C.

For comparison purposes, the experiment was repeated except that 60 g of anhydrous dextrose was used in place of the starch hydrolyzate. The results of the examples and this comparative test are given in Table V. They show that the beer obtained by the process of this invention contains as much alcohol and no more residual carbohydrate than that obtained using pure dextrose.

TABLE V

LOW-CALORIE BEER

| Adjunct | Initial Carbohydrate (g/100 ml) | Final Carbohydrate (g/100 ml) | Ethanol (g/100 ml) | % of Original Carbohydrate Fermented |
|---|---|---|---|---|
| 7.7 D.E. Starch Hydrolyzate | 14.36 | 0.42 | 6.99 | 97.1 |
| 14.2 D.E. Starch Hydrolyzate | 14.88 | 0.41 | 6.92 | 97.3 |
| 18.0 D.E. Starch Hydrolyzate | 14.82 | 0.39 | 6.82 | 97.4 |
| 21.5 D.E. Starch Hydrolyzate | 15.30 | 0.43 | 7.06 | 97.2 |
| Crystalline Dextrose[a] | 15.45 | 0.37 | 6.50 | 97.6 |

a) Comparative test; not an example of this invention.

Thus, it is apparent that there has been provided in accordance with the invention, a process for the preparation of a low-calorie alcoholic beverage using a low-cost starch hydrolyzate which fully satisfies the aims and advantages set forth above. While the invention has been described in conjunction with specific embodiments thereof, it is evident that many alternatives, modifications, and variations will be apparent to those skilled in the art in light of the foregoing description. Accordingly, it is intended to include all such alternatives, modifications, and variations as set forth within the spirit and scope of the appended claims.

-19-

*20*

## Claims

1.  A process for making a low-calorie alcoholic beverage by the fermentation of carbohydrates by a yeast which comprises

mixing a starch hydrolyzate with said carbohydrates and yeast to give a fermentation mixture containing the starch hydrolyzate, said starch hydrolyzate consisting of a product obtained by the partial enzymatic hydrolysis of starch;

contacting the fermentation mixture containing starch hydrolyzate with a saccharifying enzyme; and

separating the low-calorie beverage from the yeast and other insoluble material when the fermentation is finished.

2.  The process of claim 1 wherein the enzymatic hydrolysis of starch employs an alpha-amylase enzyme.

3.  The process of claim 1 wherein the starch is first thinned with an acid to a D.E. of not more than about 10 before enzymatic hydrolysis.

4. The process of claim 1 wherein the saccharifying enzyme is selected from the group consisting of glucoamylase, a maltogenic enzyme and mixtures thereof and is added as a soluble enzyme to the fermentation mixture.

5. The process of claim 4 wherein the saccharifying enzyme is glucoamylase added in the amount of from about 0.1 unit to about 1.0 unit per gram of starch hydrolyzate on a dry substance basis.

6. The process of claim 1 wherein the saccharifying enzyme includes a debranching enzyme.

7. The process of claim 1 wherein the starch hydrolyzate has a D.E. of from about 7 to about 80.

8. The process of claim 7 wherein the starch hydrolyzate has a D.E. of from about 20 to about 70.

9. The process of claim 8 wherein the starch hydrolyzate has a D.E. of from about 30 to about 60.

10. The process of claim 1 wherein the fermentation is carried out until the alcoholic beverage contains less than about 5 grams of carbohydrate per liter.

11.   The process of claim 1 wherein the saccharifying enzyme is an immobilized enzyme attached to or adsorbed on a solid support.

12.   The process of claim 1 wherein the low-calorie alcoholic beverage is a low-calorie wine.

13.   The process of claim 1 wherein the low-calorie alcoholic beverage is a low-calorie beer and the carbohydrates are those present in the wort.

14.   A fermentation additive useful for the preparation of low-calorie alcoholic beverages comprising a mixture of a saccharifying enzyme and a starch hydrolyzate obtained by the partial enzymatic hydrolysis of starch.

15.   The fermentation additive of claim 14 wherein the saccharifying enzyme is a glucoamylase enzyme present in the amount of from about 0.1 unit to about 1.0 unit of glucoamylase per gram of starch hydrolyzate on a dry substance basis.

16.   The fermentation additive of claim 14 wherein the starch hydrolyzate has a D.E. of from about 7 to about 80.

17.   The fermentation additive of claim 16 wherein the starch hydrolyzate has a D.E. of from about 20 to about 70.

18.   The fermentation additive of claim 17 wherein the starch hydrolyzate has a D.E. of from about 30 to about 60.